# EUROPEAN PATENT APPLICATION

(11) **EP 4 501 184 A1**
(43) Date of publication of application: **05.02.2025**
(21) Application number: 23777807.1
(22) Date of filing: 13.03.2023
(51) Int. Cl.: A47J 36/32, A47J 27/00, A47J 36/00

(54) **COOKING UTENSIL RICE COOKING CONTROL METHOD AND COOKING UTENSIL**

(30) Priority: 29.03.2022 CN 202210318496; 29.03.2022 CN 202210317381; 07.05.2022 CN 202210490068
(71) Applicant: Joyoung Company Limited, Jinan, Shandong 250118 (CN)
(72) Inventor: ZHU, Zechun, Jinan, Shandong 250118 (CN); CUI, Weimin, Jinan, Shandong 250118 (CN); YU, Lingzhen, Jinan, Shandong 250118 (CN); WANG, Yuan, Jinan, Shandong 250118 (CN); ZHANG, Dai, Jinan, Shandong 250118 (CN); JIANG, Huiping, Jinan, Shandong 250118 (CN); XU, Sheng, Jinan, Shandong 250118 (CN)
(74) Representative: advotec.
(86) International application number: PCT/CN2023/081025
(87) International publication number: WO 2023/185430

(57) **Abstract**

A cooking utensil rice cooking control method, and a cooking utensil. The control method comprises the following steps: receiving a cooking instruction, and controlling a cooking utensil to execute a preset cooking curve to a water absorption stage; acquiring a first temperature of the wall of an inner container; controlling wind generated by an air supply apparatus to blow toward the outer wall of the inner container to form an air flow, the air flow being heated by the outer wall of the inner container and/or a heating apparatus to form a hot air flow, and the air supply apparatus and the heating apparatus jointly controlling a water absorption temperature in the inner container to be a set temperature, the set temperature being no greater than the first temperature. The cooking utensil comprises an inner container used for cooking rice, a heating apparatus, a bottom temperature sensor and an air supply apparatus. A hot air flow is formed by means of air flow of the air supply apparatus being heated by of the outer wall of the inner container and/or the heating apparatus, and the heating apparatus and the air supply apparatus jointly control the water absorption temperature in the inner container to be a set temperature, which can make temperature control more accurate, and cause a water absorption temperature in the inner container to increase more quickly.

## Description

The present application claims the priorities to following Chinese Patent Applications:
1) Chinese Patent Application No. 2022104900687, titled "COOKING UTENSIL RICE COOKING CONTROL METHOD AND COOKING UTENSIL", filed with the China National Intellectual Property Administration on May 7, 2022;
2) Chinese Patent Application No. 2022103184961, titled "COOKING UTENSIL RICE COOKING CONTROL METHOD AND COOKING UTENSIL", filed with the China National Intellectual Property Administration on March 29, 2022; and
3) Chinese Patent Application No. 2022103173810, titled "COOKING UTENSIL RICE COOKING CONTROL METHOD AND COOKING UTENSIL", filed with the China National Intellectual Property Administration on March 29, 2022;
the entire disclosures of which are incorporated herein by reference.

### FIELD

The present application relates to the technical field of kitchen appliance, and in particular to a cooking method for making rice using a cooking utensil and the cooking utensil.

### BACKGROUND

In a rice cooking process of an current electric rice cooker, there is generally a stage of soaking the rice to absorb water, that is, in the early cooking stage of the electric rice cooker, the water temperature of the rice in an inner pot is controlled at the water absorption temperature for a certain period of time, so that the rice absorbs water slowly.

In the existing water absorption stage, due to the hysteresis of temperature detection, the temperature of the rice water in the inner pot rises slowly, which in turn affects the cooking effect of the rice.

### SUMMARY

The present application provides a control method for cooking rice with a cooking utensil and the cooking utensil, which solves the problem of poor temperature control accuracy of the cooking utensil.

The technical solution of the embodiment of the present application is implemented as follows.

On one hand, an embodiment of the present application provides a control method for cooking rice with a cooking utensil, the cooking utensil includes an inner pot for cooking rice, a heating device, a bottom temperature sensor and an air supply device, and the control method includes the following steps:
receiving a cooking instruction, controlling the cooking device to execute a preset cooking curve to a water absorption stage;
acquiring a first temperature of the inner pot wall;
controlling wind generated by an air supply device to blow toward an outer wall of the inner pot to form a wind flow, the wind flow is heated by the outer wall of the inner pot and/or the heating device to form a hot wind flow, and the hot wind flow and the heating device are combined to control a water absorption temperature in the inner pot to a set temperature; and the set temperature is not greater than the first temperature.

On the other hand, an embodiment of the present application provides a cooking device, including an inner pot for cooking rice, a heating device, a bottom temperature sensor, an air supply device, a memory and a processor, the memory stores a computer program that can be run on the processor; when the processor executes the program, the steps in any one of the methods are implemented.

In the embodiment of the present application, the wind flow of the air supply device forms the hot air flow under the heating of the outer wall of the inner pot and/or the heating device, and the heating device and the air supply device are combined to control the water absorption temperature in the inner pot to the set temperature, which can make the temperature control more accurate and make the water absorption temperature in the inner pot increase more quickly.

### BRIEF DESCRIPTION OF THE DRAWINGS

The drawings described herein are used to provide a further understanding of the present application and constitute a part of the present application. The schematic embodiments of the present application and their descriptions are used to explain the present application and do not constitute an improper limitation on the present application. In the drawings:
FIG. 1 is a flow chart of an embodiment of a cooking method for making rice with a cooking utensil provided in some embodiments of the present application;
FIG. 2 is a graph showing the change of the working temperature over time during the cooling process of the air supply device provided in some embodiments of the present application;
FIG. 3 is a graph showing the change of the working temperature over time during the cooling and heating process of the air supply device provided in some embodiments of the present application;
FIG. 4 is a graph showing the whole process of rice cooking provided in some embodiments of the present application;
FIG. 5 is a structural block diagram of the cooking utensil provided in some embodiments of the present application;
FIG. 6 is a schematic diagram showing the structure of the cooking utensil provided in some embodiments of the present application;
in which,
10 pot body; 101 heat preservation inner cover; 105 heating device; 106 accommodating cavity;
20 pot lid;
30 inner pot; 301 cooking cavity;
40 fan.

### DETAILED DESCRIPTION OF THE EMBODIMENTS

In order to more clearly explain the overall concept of the present application, the following is a detailed description in combination with the drawings of the specification by way of example.

In the following description, many specific details are described to facilitate a full understanding of the present application. However, the present application can also be implemented in other ways different from those described herein. Therefore, the scope of protection of the present application is not limited by the specific embodiments disclosed below.

In addition, in the description of the present application, it should be understood that the orientation or position relationship indicated by the terms "inside" and "outside" is based on the orientation or position relationship shown in the drawings, which is only for the convenience of describing the present application and simplifying the description, rather than indicating or implying that the device or element referred to must have a specific orientation, be constructed and operated in a specific orientation, and therefore cannot be understood as a limitation of the present invention.

In the present application, unless otherwise clearly specified and limited, the terms "installed", "connected", "connected", "fixed" and the like should be understood in a broad sense, for example, it can be a fixed connection, a detachable connection, or an integral connection; it can be a mechanical connection, an electrical connection, or a communication; it can be directly connected, or indirectly connected through an intermediate medium, it can be the internal connection of two elements or the interaction relationship between two elements. For ordinary technicians in this field, the specific meanings of the above terms in the present invention can be understood according to the specific circumstances.

In this application, unless otherwise clearly specified and limited, the first feature "above" or "below" the second feature can be the first and second features directly contacting, or the first and second features indirectly contacting through an intermediate medium. In the description of this specification, the reference terms "implementation method", "example", "one embodiment", "example" or "specific example" mean that the specific features, structures, materials or characteristics described in combination with the embodiment or example are included in at least one embodiment or example of this application. In this specification, the schematic representation of the above terms does not necessarily refer to the same embodiment or example. Moreover, the specific features, structures, materials or characteristics described can be combined in a suitable manner in any one or more embodiments or examples.

First of all, this application is based on the following understandings and discoveries of the inventor.

Based on a space kitchen project that Applicant participated in the research and development, Applicant invented a hot air heating device for the space capsule to solve the needs of astronauts to heat food in the space capsule, the applicant further studied the hot air precise temperature control technology and applied it to small kitchen appliances, resulting in the hot air precise temperature control cooking process of the present application, which greatly improved the water absorption consistency of rice and improved the taste of rice.

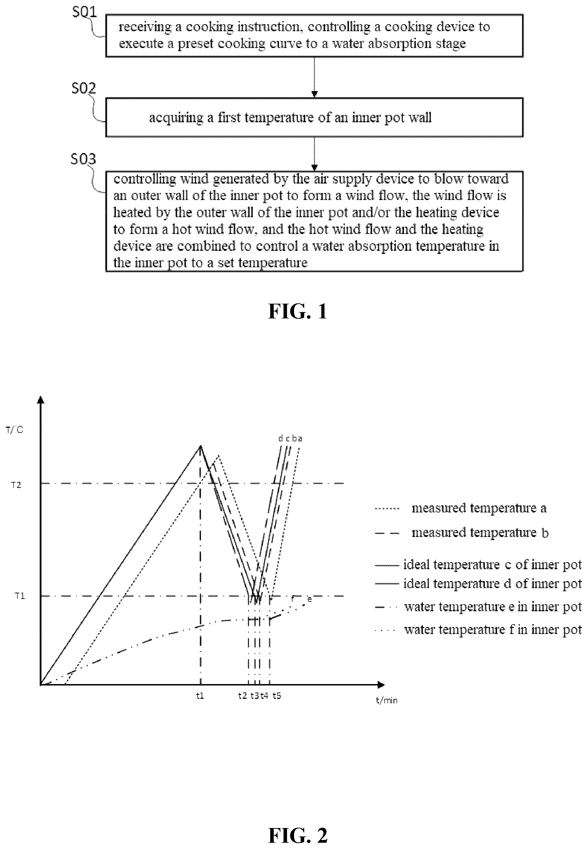

Referring to FIG. 1, a flow chart of an embodiment of a control method for cooking rice using a cooking appliance of the present application is shown. The control method for cooking rice is applied to a cooking appliance capable of cooking rice; the cooking appliance may include but is not limited to an electric rice cooker, an electric pressure cooker, etc.. In the following control method, the cooking appliance includes an inner pot for cooking rice, a bottom temperature sensor, a heating device, and an air supply device, as described below.

The cooking method includes:
S01: receiving a cooking instruction, and controlling the cooking device to execute a preset cooking curve to a water absorption stage;
here, the cooking instruction may be, but is not limited to, an operation instruction issued by touching an operation panel or a display panel of the cooking device, a remote control instruction issued by an infrared remote controller or a remotely controlled device, or a remote control instruction issued by a remote server.

The preset cooking curve can complete the cooking of rice, and the preset cooking curve may be, but is not limited to, stored in the cooking device memory, in the remote server, or in the smart terminal; for rice cooking, the preset cooking curve generally includes a water absorption stage, a heating stage, a boiling stage, a stewing stage, a heat preservation stage, etc..

The purpose of the water absorption stage is to keep the water temperature of the rice in the inner pot at the water absorption temperature for a certain period of time, so that the rice absorbs water slowly, and control the uniformity of the water temperature of the rice, so as to avoid the water temperature of some rice being too high, which may otherwise result in gelatinization of the rice grains, and thus making the water absorption rate, hardness, viscosity, elasticity, etc. of the rice better.

Ideally, the water absorption temperature of the rice in the inner pot should not exceed 55°C. Preferably, it is best to be maintained at 43°C -45°C, so that the starch of the rice grains can be hindered from a -forming, thereby ensuring the uniformity of the water absorption of the rice.

S02: acquiring the first temperature of an inner pot wall;
it is known for those skilled in the art that the first temperature can be obtained by a bottom temperature sensor arranged on the cooking utensil. Specifically, in one embodiment, the bottom temperature sensor is an NTC thermistor, which abuts against a bottom of the inner pot, and the temperature data of the inner pot can be converted into an electrical signal. In addition, in order to facilitate the acquisition of a boiling point temperature value, a top temperature sensor can be provided on the cooking utensil. Specifically, in one embodiment, the top temperature sensor is an NTC thermistor, which is provided on a pot lid of the cooking utensil, and a probe extends into the cooking cavity defined by the inner pot and the pot lid, and the boiling point temperature value is obtained by obtaining the temperature data in the cooking cavity and converting it into an electrical signal.

S03: controlling wind generated by the air supply device to blow toward the outer wall of the inner pot to form a wind flow, and the wind flow is heated by the outer wall of the inner pot and/or the heating device to form a hot wind flow, and the hot wind flow is combined with the heating device to control the water absorption temperature in the inner pot to a set temperature; and the set temperature is not greater than the first temperature.

It should be understood that the air supply device includes but is not limited to a fan, an air pump, etc., and the air supply device is connected to a control system of the cooking utensil, and can be started according to the instructions of the control system to generate wind and blow toward the outer wall of the inner pot to form a wind flow.

When the wind flow contacts the outer wall of the inner pot or the heating device, it may exchange heat with the contact object and be heated into a hot wind flow; it should be understood that when the air supply device forms the hot wind flow, it is heated by the heat of the inner pot or the heating device, rather than the air supply device itself or other methods to form the hot wind flow. Therefore, in the water absorption stage, the air supply device can be combined with the heating device to control the wall temperature and water absorption temperature of the inner pot.

Based on the field of rice cooking, it is known for those skilled in the art that in the water absorption stage, the heating device heats the inner pot in order to make the water absorption temperature in the inner pot reach the set temperature. At this time, the temperature of the pot body fluctuates within a certain range. In some embodiments, the fluctuation range of the first temperature is between 45°C-80°C, and the water absorption temperature is controlled below the set temperature of 45°C; in some other embodiments, the fluctuation range of the first temperature can be at other temperature values. Preferably, the water absorption temperature is controlled below 55°C.

In some specific embodiments of the present application, the combined control includes:
according to a preset temperature range, the heating device is controlled to work intermittently in the water absorption stage;
when the heating device stops working, the air supply device is controlled to work;
when the first temperature is lower than a lower limit temperature value of the preset temperature range, the air supply device is controlled to stop working, and the heating device is controlled to resume heating.

As shown in FIG. 2, when the heating device works intermittently during the water absorption stage, the heating device stops heating when the temperature is higher than T2, and resumes heating when the temperature is lower than T1. The first temperature of the inner pot wall changes in the process of heating and cooling. In some specific implementations, the upper limit temperature (T2) and the lower limit temperature (T1) at different times can be set to be different to form multiple different preset temperature intervals.

When only the heating device controls the temperature of the inner pot, as shown in FIG. 2, a curve c is the ideal temperature of the pot body. Due to hysteresis, the temperature data measured by the bottom temperature sensor has a certain delay, showing the measured temperature shown in a curve a. During the cooking process, the heating device heats the inner pot with a certain power. When the temperature value exceeds T2, heating is stopped. The overall temperature of the rice water is uniform through the convection of cold and hot water in the inner pot. When the temperature drops to T1, the heating device resumes heating and continues to provide heat for the rice-water mixture in the inner pot. By comparing the curve c with the curve a, it can be found that, ideally, the heating device should resume heating at time t3. However, in reality, the heating device does not resume heating until time t5. The heating device fails to start in time to continue to provide heat to the cooked rice that has been fully convected, causing the rice to heat up slowly. At this time, the water temperature in the inner pot slowly rises as shown by curve e.

As shown in FIG. 2, when the heating device stops working, the air supply device is controlled to work, so that the measured temperature of the bottom temperature sensor drops as shown in a curve b. Specifically, under the combined control of the heating device and the air supply device, a curve d is the ideal inner pot temperature, and the measured temperature is shown as shown in the curve b. Compared with the prior art, the curve b drops to the lower limit temperature value (T1) before the curve a. At this time, the heating device resumes heating at time t4, which is earlier than time t5. The heating device starts more timely to continue to provide heat for the rice with complete convection, causing the rice to heat up faster. At this time, the water temperature in the inner pot rises faster as shown in a curve f. After the heating device resumes heating, the air supply device stops working, thereby avoiding heat loss and increasing the heating rate of rice-water.

In some specific embodiments of the present application, multiple preset temperature intervals are provided:
each preset temperature interval has an upper limit temperature and a lower limit temperature;
compared with the upper limit temperatures of adjacent preset temperature intervals, the upper limit temperature value of the previous preset temperature interval is greater than the upper limit temperature value of the next preset temperature interval;
compared with the lower limit temperatures of adjacent preset temperature intervals, the lower limit temperature value of the previous preset temperature interval is greater than the lower limit temperature value of the next preset temperature interval.

For example, if the previous preset temperature interval is [50, 80], then the next preset temperature interval is [47, 70]. With such a setting, more heat can be added to the rice water when the temperature of the rice water is not high in an early stage, and less heat can be added when the temperature of the rice water is close to the set temperature in a later stage to avoid overheating.

In some specific embodiments of the present application, the combined control includes:
that the heating device works intermittently in the water absorption stage, and the gas supply device works in the whole process in the water absorption stage; so as to control the first temperature to be within the preset temperature interval.

The whole process operation means that during the cooking process, the heating device works not only in the process of stopping heating, but also in the heating process.

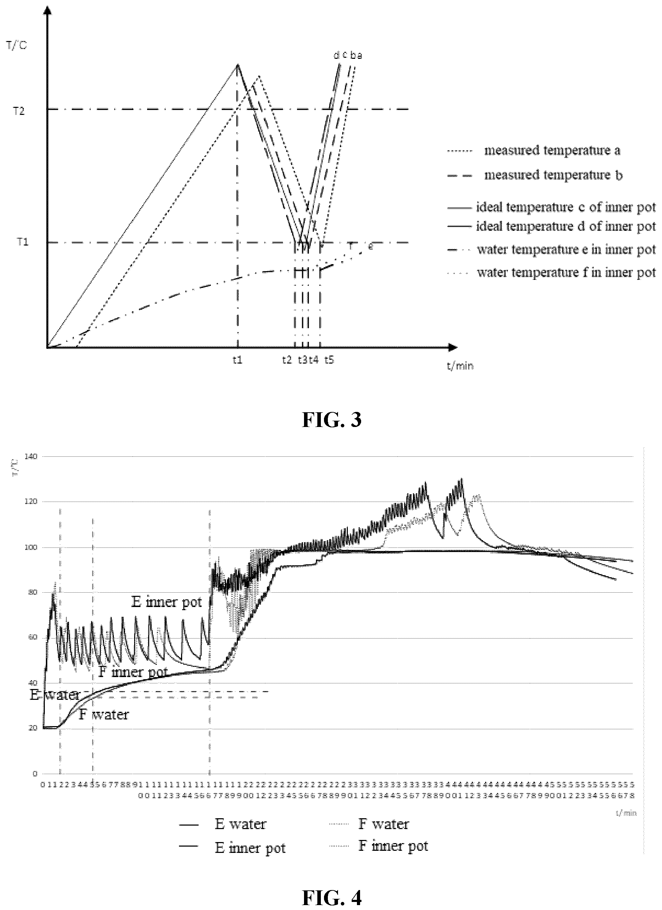

Specifically, as shown in FIG. 3, when only the heating device controls the temperature, the heating device resumes heating from time t5, and the inner pot temperature rises rapidly. The ideal inner pot temperature is shown as shown in the curve c, and the measured temperature is shown in the curve a. When the air supply device is operated, the heating device resumes heating from time t4, and the inner pot temperature rises rapidly. The ideal inner pot temperature is shown in the curve d, and the measured temperature is shown in the curve b. Since the heat carried away by the wind flow is limited and the specific heat of the metal is small, it may not have a great impact on the heating rate.

In some specific embodiments of the present application,
at the beginning of cooking, the heating device is controlled to heat so that the cooking utensils perform the preheating stage according to the preset cooking curve;
when the first temperature exceeds the set threshold in the preheating stage, the air supply device is controlled to work.

In the early stage of cooking, the temperature of the rice is low, and there is a preheating stage in which the heating device continues to heat. At this time, the air supply device is controlled to stop working, which can ensure that the preheating stage can heat up quickly. When the first temperature exceeds the set threshold, the air supply device is controlled to work again, so as to perform precise temperature control for the water absorption stage after the preset stage.

In some specific embodiments of the present application, the combined control includes:
acquiring the execution time of the water absorption stage;
when the execution time is greater than the preset time;
controlling the air supply device to stop working.

During the heating process, the temperature of the rice water gradually increases as the heating proceeds. When the temperature of the rice water is low, the temperature of the rice water in the inner pot can be quickly made uniform by convection under one heating and stopping heating. After the temperature of the rice-water increases, the temperature difference between the local temperature and other parts of the rice inside is reduced under intermittent heating, so that convection decreases. The interior of the rice mainly relies on internal heat conduction to make the temperature uniform. For this reason, if there is a hot air flow in the late stage of the water absorption stage, there is a possibility that the temperature of the rice water in the pot may not be evenly transferred and the heating may be resumed, resulting in the possibility that the water absorption temperature in the inner pot exceeds the preset temperature. After exceeding the water absorption temperature, the starch on the surface of the rice begins to gelatinize, the water absorption effect becomes poor, and the water absorption effect of the rice grains is poor, resulting in a poor taste of the rice.

For this reason, in a specific embodiment of the present application, the combined control between the air supply device and the heating device may not execute the air supply in the later stage of the water absorption stage, and may execute the air supply in the early stage, so as to improve the accuracy of temperature control; for example, when the execution time of the water absorption stage is less than 1/2 of the total water absorption time, the combined control is executed. The preset time can be set according to the actual situation.

For the same reason, the combined control can be carried out by the working times of the heating device. In some specific embodiments, the combined control includes:
acquiring the working times of the heating device in the water absorption stage;
when the heating device is executed to the preset times, the air supply device is controlled to stop working.

The more times the heating device works, the more heat is provided to the rice water in the inner pot, and the higher the temperature of the rice water in the inner pot is. For this reason, the combined control can be carried out by controlling the working times of the heating device; specifically, the working time of the heating device is the number of times the heating device completes heating of the inner pot, or a working cycle of the heating device. A working cycle may include a fixed number of heating times (one or more) and a fixed number of stopping times (one or more).

In some specific embodiments, the combined control includes:
acquiring the execution state of the heating device, when the heating device stops heating, starting the gas supply device, acquiring the working time of the gas supply device, and when the working time exceeds the preset time, executing the natural cooling process.

By starting the air supply device before stopping heating, the temperature drop can be accelerated. By stopping the air supply device after stopping heating, natural cooling can be performed to ensure that the temperature inside the inner pot is uniform after convection and heat transfer, and the heating device resumes heating. The above takes into account both rapid heating and uniform temperature.

In some specific embodiments, the combined control includes:
acquiring the execution status of the heating device, when the heating device stops heating, starting the air supply device, obtaining the working time of the air supply device, and when the working time exceeds the preset time, performing the natural cooling process.

In the above embodiment, the air supply device is started in the early stage to perform natural cooling, which is applied in the later stage of the water absorption stage. As mentioned above, in the later stage of the water absorption stage, the heat is transferred more by the heat conduction of the rice water, so the temperature drop rate of the inner pot in the later stage may decrease, and it may take a longer time to reach the lower temperature limit. For the later stage of the water absorption stage, in order to avoid the air supply device starting to work when the temperature of the rice water in the inner pot is not evenly conducted, causing the heating device to resume heating in advance and causing the rice water temperature to be higher than the set temperature of the water absorption. By acquiring the execution state of the heating device, when the heating device stops heating, the air supply device is started to work, and the working time of the air supply device is obtained. When the working time exceeds the preset time, the natural cooling process is performed. It can make the temperature drop faster in the early stage when the heating device stops heating, and slower in the later stage, so as to balance the contradiction between temperature accuracy and over-temperature problem.

In the present application, without the participation of the above-mentioned air supply device, the temperature of the inner pot is mainly controlled by the heating device. When the heating device is working, the inner pot is heated up quickly, radiates and conducts heat to the external medium. From the distribution of the medium inside and outside the inner pot and itself, the pot body is a mixture of rice and water, and the specific heat of water is large. During the heating process, it needs to absorb a large amount of heat to rise temperature. The inner pot is metal. Compared with water, the specific heat of metal is smaller than that of water, and the thermal conductivity is better than water. It can be heated up faster and can conduct heat to other positions of the inner pot. The outside of the inner pot is an air layer. The specific heat of the air layer is larger than that of metal and smaller than that of water. It is easier to be heated up than water, but more difficult to be heated up than metal. The thermal conductivity of the static air layer is lower than that of metal and water, and it has certain heat preservation properties. There are multiple layers of media between the bottom temperature sensor and the rice, which can be the inner pot, air layer, sensor housing, thermal element, etc.; thus, the temperature value detected by the bottom temperature sensor has a certain hysteresis, and cannot well reflect the temperature of the inner pot, and cannot reflect the temperature of the rice water inside the inner pot, so that the measured temperature value has a certain gap with the inner pot body temperature and the rice water temperature inside the inner pot. In comparison, due to the rapid temperature rise and good thermal conductivity of the inner pot body, the measured temperature is closer to the temperature of the metal inner pot body, and there is a greater error with the temperature of the rice water inside the inner pot.

In the actual cooking process, the temperature of the rice in the inner pot needs to be maintained at a certain temperature value in some cooking stages. Due to the existence of the above-mentioned temperature control error, it is necessary to control the heating device to intermittently heat the inner pot. When the heating device is heated, the temperature of the pot body rises rapidly first, and the heat is first transferred to the rice-water in contact with the pot body, so that the temperature of this part of the rice-water rises first. In order to avoid the problem of overheating of the part of the rice-water in contact with the pot body, it is necessary to control the heating device to stop heating, so that the hot and cold water in the pot body convect to make the temperature of the rice water in the inner pot uniform. During the convection process, the heat of the pot body is absorbed by the rice-water, and the temperature drops rapidly. However, due to the hysteresis of the temperature measured by the external temperature sensor, it cannot quickly reflect the actual temperature of the inner pot, resulting in the delay of the time node for resuming heating, and then the heating device cannot be started in time to heat the rice after convection, resulting in a slow heating speed of the rice.

Specifically, in one embodiment, as shown in FIG. 1, a curve c is the ideal inner pot temperature. Due to hysteresis, the temperature data measured by the bottom temperature sensor has a certain delay, showing the measured temperature shown in the curve a. During the cooking process, the heating device heats the inner pot with a certain power. When the temperature value detected exceeds T2, the heating is stopped, and the overall temperature of the rice water is uniform through the convection of cold and hot water in the inner pot. When the temperature is detected to drop to T1, the heating device resumes heating and continues to provide heat for the rice water mixture in the inner pot. By comparing the curve c and the curve a, it can be found that the heating device should resume heating at time t3 in an ideal state, but in fact, the heating device waits until time t5 to resume heating. The heating device fails to start in time to continue to provide heat to the cooked rice that has been fully convected, resulting in a slow heating rate of the rice. At this time, the water temperature in the bile body rises slowly as shown in a curve e.

In the embodiment shown in FIG. 1, when the air supply device is used to make the air layer outside the inner pot flow, the heat transfer of the air layer at this time relies more on convection, which improves the heat transfer capacity of the air layer and reduces the heat preservation property of the air layer. The temperature sensor at the bottom can drop to the preset temperature faster during the cooling process, so that the heating device can resume heating in advance, so as to provide heat for the rice in the inner pot in time, and then quickly be heated up. Here, the hot air flow is formed by the heating of the outer wall of the inner pot and/or the heating device, so the inner pot temperature may also drop synchronously with the bottom temperature sensor, avoiding the possibility of the inner pot temperature being heated by the hot air flow and the temperature rising due to the direct delivery of the hot air flow. Since the specific heat of the air flow is still less than that of water and the thermal conductivity is still worse than that of water, most of the heat is still absorbed by water during the temperature drop, and the heat taken away by the air flow is still limited, so the heat loss is not large, and it may not affect the temperature rise of the rice water in the inner pot, so the temperature measurement accuracy of the bottom temperature sensor can be improved by the air flow.

Specifically, as shown in FIG. 1, under the combined control of the heating device and the air supply device, a curve d is the ideal inner pot temperature, and the measured temperature is shown as a curve b. Compared with the prior art, the curve b drops to the preset temperature T1 before the curve a. At this time, the heating device resumes heating at time t4, earlier than time t5. The heating device starts more timely to continue to provide heat to the rice that is fully convected, causing the rice to heat up faster. At this time, the water temperature in the inner pot body rises more quickly as shown in a curve f.

Taking the water absorption stage as an example, assuming that the total water absorption time is 10 minutes, in the prior art, if the heating device heats 10 times in 10 minutes, the above technical solution can increase the heating times of the heating device to more than 10 times, thereby rapidly increasing the water absorption temperature of the inner pot.

In summary, the air flow of the air supply device forms a hot air flow under the heating of the outer wall of the inner pot and/or the heating device, and the heating device and the air supply device are linked to control the water absorption temperature in the inner pot to the set temperature T2, which can make the temperature control more accurate and increase the water absorption temperature in the inner pot more quickly.

Referring to the temperature curve shown in FIG. 4, in a specific embodiment of the present application, the experimental data are as follows:

| Time/min(s) | E water | E inner pot | F water | F inner pot |
|---|---|---|---|---|
| 1 | 20.831 | 71.651 | 19.96 | 84.338 |
| 2 | 21.228 | 49.579 | 21.483 | 55.936 |
| 2 | 21.67 | 64.856 | 22.198 | 51.821 |
| 2 | 22.324 | 61.132 | 22.948 | 48.204 |
| 2 | 23.932 | 49.723 | 24.289 | 67.706 |
| 2 | 24.185 | 50.001 | 24.414 | 69.082 |
| 3 | 25.605 | 66.768 | 25.103 | 61.547 |
| 3 | 29.842 | 47.731 | 27.428 | 46.782 |
| 3 | 30.5 | 63.742 | 27.897 | 45.16 |
| 4 | 32.088 | 51.36 | 29.526 | 63.961 |
| 4 | 32.646 | 48.31 | 30.086 | 58 |
| 4 | 33.095 | 64.925 | 30.708 | 53.541 |
| 5 | 34.582 | 48.397 | 32.632 | 45.334 |
| 5 | 35.023 | 67.046 | 33.058 | 58.893 |
| 5 | 35.374 | 59.991 | 33.425 | 64.811 |
| 6 | 36.483 | 48.383 | 34.833 | 50.842 |
| 6 | 36.763 | 65.448 | 35.246 | 48.994 |
| 6 | 37.423 | 55.032 | 35.952 | 46.316 |
| 6 | 37.716 | 51.716 | 36.312 | 62.974 |
| 7 | 37.966 | 49.37 | 36.668 | 57.673 |
| 7 | 38.207 | 68.937 | 37.019 | 53.795 |
| 8 | 38.954 | 51.512 | 38.299 | 47.305 |
| 8 | 39.131 | 49.377 | 38.637 | 61.868 |
| 8 | 39.199 | 56.933 | 38.741 | 62.545 |
| 8 | 39.315 | 69.211 | 38.895 | 60.786 |
| 9 | 40.384 | 49.945 | 40.184 | 48.763 |
| 9 | 40.524 | 69.567 | 40.368 | 48.062 |
| 9 | 40.796 | 62.479 | 40.548 | 65.161 |
| 10 | 41.712 | 50.225 | 41.53 | 51.415 |
| 11 | 41.876 | 69.812 | 41.696 | 50.528 |
| 11 | 42.467 | 55.667 | 42.224 | 48.342 |
| 12 | 43.058 | 50.183 | 42.786 | 56.225 |
| 12 | 43.193 | 69.399 | 42.924 | 54.671 |
| 14 | 44.426 | 50.262 | 43.863 | 48.859 |
| 14 | 44.508 | 67.992 | 43.953 | 48.601 |
| 16 | 45.401 | 50.435 | 44.605 | 46.937 |
| 16 | 45.472 | 69.019 | 44.645 | 46.813 |
| 16 | 45.834 | 56.942 | 44.779 | 46.477 |
| 16 | 45.85 | 58.535 | 44.769 | 46.443 |

the data of group E are the relevant data of the water absorption stage under combined control, E water is the measured temperature of rice water in the inner pot under combined control, and E inner pot is the inner pot wall temperature data measured by the bottom temperature sensor under combined control; the data of group F are the relevant data of the water absorption stage under non-combined control, F water is the measured temperature of rice water in the inner pot under non-combined control, and F inner pot is the inner pot wall temperature data measured by the bottom temperature sensor under non-combined control.

It can be seen that the moment when the E inner pot heating device resumes heating is faster than that of the F inner pot, so that the water temperature of E water rises faster than that of F water. For example, at 6 minutes, the water temperature of group E is 34.582°C, and the water temperature of group F is 32.632°C. It can be seen that the water temperature of group E rises faster. From the change law of inner pot temperature, within 16 minutes, group F is intermittently heated 7 times, and group E is intermittently heated 14 times, which is significantly more.

In some embodiments of the present application, the air supply device is a fan, and the control of the fan includes:
controlling the fan to work at a preset speed.

The preset speed can be 1500r/min-10000r/min, so that the noise of the fan can be controlled within a reasonable range when it is working, improving the user experience.

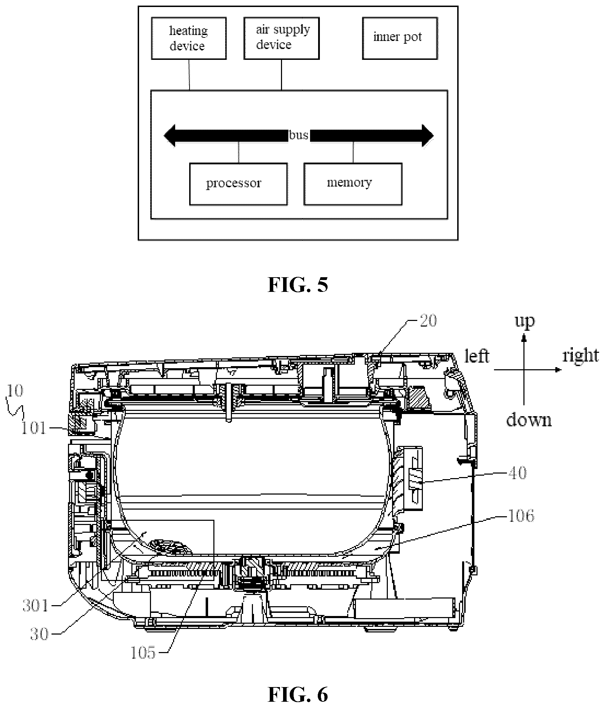

In some embodiments of the present application, with reference to FIG. 5, a cooking utensil is also proposed, including an inner pot for cooking rice, a heating device, a bottom temperature sensor, an air supply device, a memory and a processor, and the memory stores a computer program that can be run on the processor; when the processor executes the program, the steps in any of the above methods are implemented.

It is known to those skilled in the art that in one embodiment, the heating device can be an electromagnetic heating coil, and the inner pot is heated by the alternating magnetic field generated by the electromagnetic heating coil. In another embodiment, the heating device can be a heating coil, which generates heat by energizing the internal heating tube, and then conducts the heat to the rice in the inner pot through heat conduction.

Referring to FIG. 6, a structural diagram of an embodiment of the electric rice cooker disclosed in the present application is shown; the rice cooker comprises a pot body 10, a pot lid 20, a heat-insulating inner cover 101, an inner pot 30 for cooking rice, a heating device 105, and a fan 40. The pot body 10 is provided with a receiving cavity 106, the inner pot 30 is placed in the receiving cavity 106 and is located on the heating device 105, and the pot lid 20 is buckled to close the receiving cavity 106 and the inner pot 30 to form a cooking cavity 301.

The places not described in this application can be realized by adopting or drawing on existing technologies.

The various embodiments in this specification are described in a progressive manner, and the same and similar parts between the various embodiments can be referred to each other, and each embodiment focuses on the differences from other embodiments.

A person of ordinary skill in the art can understand that all or part of the steps of the above-mentioned method embodiment can be completed by hardware related to program instructions, and the aforementioned program can be stored in a computer-readable storage medium. When the program is executed, the steps of the above-mentioned method embodiment are executed; and the aforementioned storage medium includes: various media that can store program codes, such as mobile storage devices, read-only memory (ROM), magnetic disks or optical disks.

Or, if the above-mentioned integrated unit of the present application is implemented in the form of a software function module and sold or used as an independent product, it can also be stored in a computer-readable storage medium. Based on this understanding, the technical solution of the embodiment of the present application can be essentially or partly reflected in the form of a software product, which is stored in a storage medium and includes several instructions for a cooking pot (which can be a rice cooker, an electric stew pot, or an electric pressure cooker, etc.) to execute all or part of the methods described in each embodiment of the present application. The aforementioned storage medium includes: various media that can store program codes, such as mobile storage devices, ROMs, magnetic disks or optical disks.

The above description is only an embodiment of the present application and is not intended to limit the present application. For those skilled in the art, the present application may have various modifications and variations. Any modification, equivalent substitution, improvement, etc. made within the spirit and principle of the present application shall be included in the scope of the claims of the present application.

## Claims

1. A control method for cooking rice with a cooking utensil, wherein the cooking utensil comprises an inner pot for cooking rice, a heating device, a bottom temperature sensor and an air supply device, and the control method comprises following steps:
receiving a cooking instruction, controlling a cooking device to execute a preset cooking curve to a water absorption stage;
acquiring a first temperature of an inner pot wall;
controlling wind generated by the air supply device to blow toward an outer wall of the inner pot to form a wind flow, the wind flow is heated by the outer wall of the inner pot and/or the heating device to form a hot wind flow, and the hot wind flow and the heating device are combined to control a water absorption temperature in the inner pot to a set temperature;
wherein the set temperature is not greater than the first temperature.

2. The control method for cooking rice with the cooking utensil according to claim 1, wherein that the hot wind flow and the heating device are combined to control comprises:
according to a preset temperature range, controlling the heating device to work intermittently in the water absorption stage;
when the heating device stops working, controlling the air supply device to work;
when the first temperature is lower than a lower limit temperature value of the preset temperature range, controlling the air supply device to stop working, and controlling the heating device to resume heating.

3. The control method for cooking rice with the cooking utensil according to claim 2, wherein a plurality of the preset temperature intervals are provided:
each preset temperature interval has an upper limit temperature and a lower limit temperature;
compared with upper limits of adjacent preset temperature intervals, a upper limit temperature value of a previous preset temperature interval is greater than the upper limit temperature value of a next preset temperature interval;
compared with lower limits of adjacent preset temperature intervals, the lower limit temperature value of the previous preset temperature interval is greater than the lower limit temperature value of the next preset temperature interval.

4. The control method for cooking rice with the cooking utensil according to claim 1, wherein the combined control comprises:
the heating device works intermittently in the water absorption stage, and a gas supply device works throughout the water absorption stage.

5. The control method for cooking rice with the cooking utensil according to claim 4, wherein,
when cooking starts, the heating device is controlled to heat so that the cooking appliance performs a preheating stage according to the preset cooking curve;
when the first temperature exceeds a set threshold in a preheating stage, the gas supply device is controlled to work.

6. The control method for cooking rice with the cooking utensil according to claim 1, wherein the combined control comprises:
acquiring the execution time of the water absorption stage;
when the execution time is greater than the preset time;
controlling the gas supply device to stop working.

7. The control method for cooking rice with the cooking utensil according to claim 1, wherein the combined control comprises:
acquiring a number of working times the heating device in the water absorption stage;
when the heating device has executed a preset number of times, controlling the gas supply device to stop working.

8. The control method for cooking rice with the cooking utensil according to claim 1, wherein the combined control comprises:
acquiring an execution state of the heating device, when the heating device stops heating, starting the gas supply device to work, acquiring a working time of the gas supply device, and when the working time exceeds a preset time, performing a natural cooling process.

9. The control method for cooking rice with the cooking utensil according to claim 8, wherein acquiring the execution state of the heating device further comprises:
acquiring the execution time or the number of working times the heating device in the water absorption stage, when the execution time is greater than the preset time, or the number of working times the heating is greater than the preset number, when the heating device stops heating, starting the gas supply device to work.

10. A cooking device, comprising an inner pot for cooking rice, a heating device, a bottom temperature sensor, an air supply device, a memory and a processor, wherein the memory stores a computer program for running on the processor; when the processor executes the program, the steps in the method according to any one of claims 1 to 9 are implemented.
